(19) Europäisches Patentamt
European Patent Office
Office européen des brevets

(11) Publication number: **0 228 493 B1**

(12) # EUROPEAN PATENT SPECIFICATION

(45) Date of publication of patent specification: **20.03.91**    (51) Int. Cl.⁵: **G02B 23/24, A61B 1/00**

(21) Application number: **85402515.2**

(22) Date of filing: **17.12.85**

(54) Searching and measuring endoscope.

(43) Date of publication of application:
**15.07.87 Bulletin 87/29**

(45) Publication of the grant of the patent:
**20.03.91 Bulletin 91/12**

(84) Designated Contracting States:
**CH DE FR GB LI**

(56) References cited:
**DE-A- 2 425 827**
**DE-A- 2 847 561**
**DE-B- 2 801 441**
**GB-A- 1 217 300**

(73) Proprietor: **Warner-Lambert Technologies, Inc.**
**201 Tabor Road**
**Morris Plains New Jersey 07950(US)**

(72) Inventor: **Siegmund, Walter P.**
**Cassidy Road**
**Pomfret Center Connecticut 06259(US)**

(74) Representative: **Sauvage, Renée**
**Cabinet Sauvage 100 bis, avenue de Saint-Mandé**
**F-75012 Paris(FR)**

## Description

Background of the Invention

This invention relates to endoscopes useful to locate and observe flaws, cracks, imperfections or any other internal structures or objects in industrial, medical or veterinary situations located remotely relative to an observer.

These instruments may have more than one image-transmitting system for front viewing, i.e., directly ahead of the objective head, or lateral viewing, i.e., through the side of the objective head.

Such instruments may include various means for measuring the distance between an object and the objective lens.

Prior art devices are shown and described in U. S. Patent Nos. 3,817,631, 3,819,267 and 4,279,247 and DE-A-2 425 827.

The '631 reference deals with measuring the distance of an object from the distal end of an endoscope by triangulating a pair of light beams directed through the scope to the object.

The '267 reference shows a complicated mechanical-optical means for viewing and measuring the actual size of an object by a combination of the measuring scheme of the '631 reference and a variable magnification lens system. Adjustment of these two systems applied to a differential element provides a resultant signal to an indicator means which is a relative indication of the actual size of the object.

The '247 reference discloses a plurality of image-transmitting systems within a common housing and a scheme for identifying each system for selective viewing. The preamble of claims corresponds to DE-A-2 425 827.

Summary of the Invention

In contrast to the prior art, the present invention provides a visual inspection unit embracing a simple dual image system for searching and measuring defects or imperfections in a remote object. The system requires no moving parts within the distal end or objective head.

A further feature of the invention is the provision of an inspection unit such as an endoscope useful for searching and measuring in a remotely located situation where the scope has at least one image-transmitting system fitted with a wide angle objective lens for searching and a second image-transmitting system fitted with a narrow angle objective lens of known magnification for measuring.

The present invention contemplates the use of either rigid optical lens trains or bundles of flexible fiber optics, as desired, for relaying the image to the eyepiece.

A still further feature of the invention is the provision of a search and measure inspection unit or endoscope which includes one or more reticles associated with one or both of the image-transmitting systems for reading the dimensions of an object according to meaningful and useful dimensional standards.

An inspection unit embracing certain principles of the present invention may comprise at least two image-transmitting systems each fitted with an objective lens at a distal end all enclosed in a common housing, a first image-transmitting system being fitted with a wide angle, fixed focus objective lens with corresponding large depth of field for searching and locating a critical area; and a second image-transmitting system being fitted with a narrow angle, fixed focus objective lens, said narrow angle lens having a relatively small depth of field and a relatively short, predetermined working distance and said second system having a predetermined magnification when in sharp focus while observing selected portions of said critical area.

Other features and advantages of the present invention will become more apparent from an examination of the succeeding specification when read in conjunction with the appended drawings, in which;

Brief Description of the Drawings

Fig. 1 is a side elevation of a visual inspection unit incorporating the principles of the present invention;

Fig. 2 is a front elevation, somewhat enlarged, of the distal end of the unit of Fig. 1;

Fig. 3 is a view (enlarged) of the proximal ends of the image-transmitting trains showing a reticle and a mask;

Fig. 4 shows a series of reticle arrangements;

Fig. 5 is an optical diagram showing a typical spatial relationship between an object and an objective head when the narrow angle lens is in sharp focus; and

Figs. 6 and 7 show schematically how parallax can be overcome.

Description of the Preferred Embodiment

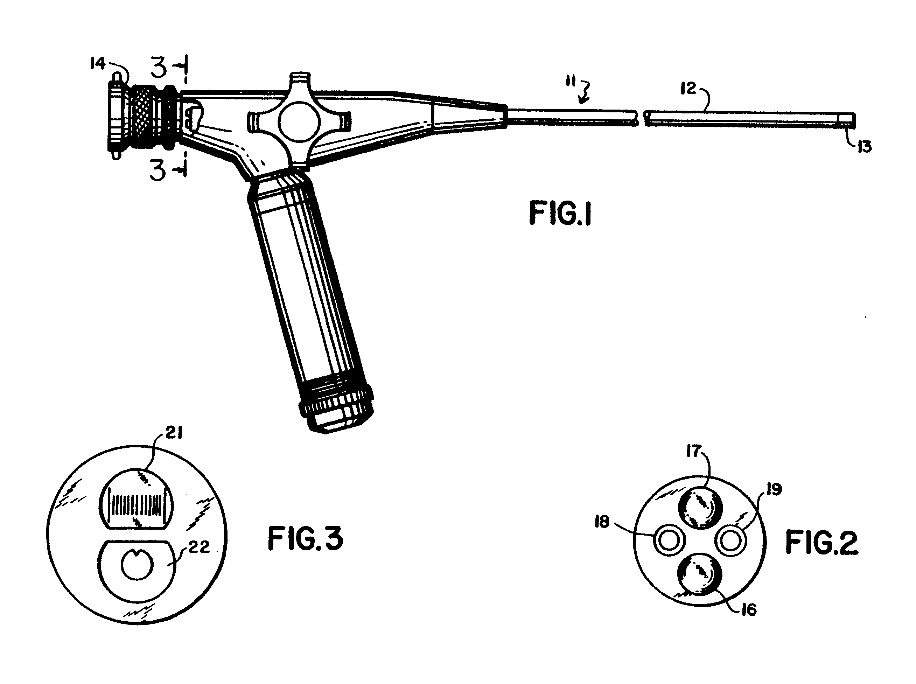

Referring to Figs. 1, 2, 3 and 4, the reference numeral 11 designates a visual inspection unit having a shaft 12, an objective head 13 and an eyepiece 14. The eyepiece 14 is adjustable in focus to accomodate individual eye correction.

The shaft 12 houses two image-transmitting or relaying systems, not shown, one system being fitted at the distal end (see Fig. 2) with a relatively wide angle (ranging from 60° to 100°) lens 16 and the other system being fitted with a relatively narrow angle (ranging from 10° to 30°) lens 17.

The image-relaying means can take the form of a rigid optical train or a flexible fiber optics bundle.

The shaft 12 also includes one or more light guides 18 and 19.

Additional features may be included such as an articulation mechanism in the case of a flexible shaft and other utilities and accessories that are used commonly with endoscopes and the like.

Fig. 3 shows the proximal ends of the two image-transmitting systems with a masked reticle 21 at the end of the system having the narrow angle objective lens 17 and a plain mask 22 at the end of the system having the wide angle objective lens 16.

For purposes of claiming the invention, the narrow angle lens system may be referred to as the measuring system and the wide angle lens system may be referred to as the searching system.

For reasons that will become more apparent as the specification proceeds, the searching system may also be fitted with a mask inscribed with a reticle to present a coarse measurement while the measuring system reticle 21 provides a fine measurement.

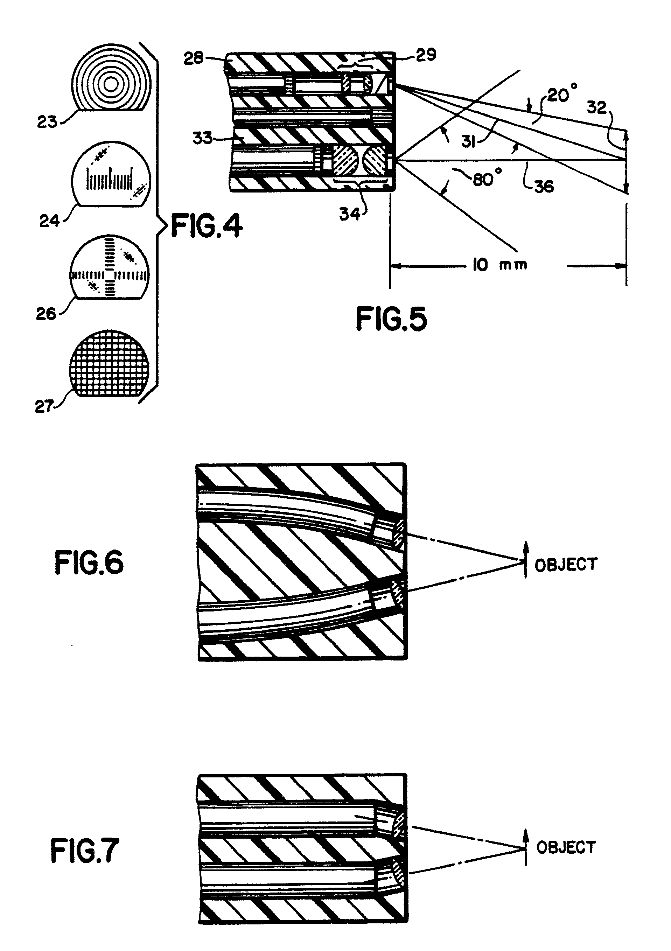

Fig. 4 shows a variety of reticle configurations 23, 24, 26 and 27 which are merely representative of indicia that may be employed as dimensional indicators of the actual size of an observed object. The reticle 21 can represent a scale of polar coordinates, rectangular coordinates or a system of lines, grids or dots.

Fig. 5 shows an optical diagram demonstrating the principles of the invention. In this example, an image-transmitting fiber optics bundle 28 is fitted with a fixed focus objective lens 29 providing a relatively high magnification when in sharp focus and subtending a relatively narrow angle field of approximately 20° with an axis 31 intersecting an object 32 generating a predetermined working distance of 10 mm.

Alongside bundle 28 and within the same shaft 12, there is a second image-transmitting bundle 33 fitted with a fixed focus lens 34 providing a relatively low magnification and subtending a wide angle field of approximately 80° with an axis 36 intersecting the object 32 and the axis 31.

As is apparent in Figs. 2 and 5, the diagram includes light guides 18 and 19 for reasons that are well known in the art.

The visual inspection system operates in searching a critical area and ultimately measuring a defect located in the critical area as follows:

The shaft of the inspection unit is inserted into a cavity of a machine (turbine housing, for example) or of an animate body (medical or veterinary situation) and the operator "searches" a remote area observing the area through eyepiece 14 which is common to both image-transmitting bundles 28 and 33. While viewing through the image bundle 33 equipped with with wide angle lens 34, the image will be in sharp focus over a wide range of distances. In general, the image through the narrow angle lens will appear blurred unless coincidentally the object is at the pre-set measuring distance. Having located a critical area, the operator advances or withdraws the shaft 12 until the point of interest or object (defect, flaw, imperfection, etc.) of the critical area comes into sharp focus in the image bundle 28 equipped with the narrow angle objective lens 29. The reticle on the image-transmitting bundle 28 is calibrated relative to the focal length of said narrow angle objective lens and said predetermined working distance such that when the narrow angle system is in sharp focus the actual size of the objects can be accurately measured.

Figs. 6 and 7 show schematically objective head arrangements for overcoming parallax.

In Fig. 6 the image bungles are canted so that the centerlines of the optical axes intersect at the point of sharp focus while in Fig. 7 the lenses are offset to accomplish the same intersection.

It is anticipated that a wide variety of modifications may be devised in the present invention without departing from the spirit and scope of the claims.

For example, individual eyepieces may be used, i.e., one for each image-transmitting system. The narrow angle lens system may be removable from the scope or inspection unit and inserted in a borescope, for example, having a spare channel. A reticle may be applied to both image-transmitting systems to effect a coarse and a fine measurement.

The invention is not limited to the embodiment described. In particular, each image-transmitting system could be fitted with an adjustable focus eyepiece 14 at the proximal end of each system. The second image-transmitting system 28, 29 could be separable from said first system 33, 34 and adapted to be removed readily from the housing 12. The first and second image-transmitting systems could be rigid optical lens trains.

## Claims

1. A visual inspection unit of the type used to observe flaws, cracks, or other defects or imperfections of matter in industrial, medical or veterinary situations located remotely relative to an observer, comprising:

at least two image-transmitting systems (28, 29; 33, 34) each fitted with an objective lens (17; 16) at a distal end all enclosed in a common housing (12),

the first image-transmitting system being fitted with a wide angle, fixed focus objective lens (16) with corresponding large depth of field for searching and locating a critical area; and

the second image-transmitting system being fitted with a narrow angle, fixed focus objective lens (17), said narrow angle lens having a relatively small depth of field and a relatively short, predetermined working distance and said second system having a predetermined magnification when in sharp focus while observing selected portions of said critical area,

the images from both image-transmitting systems being observed by an eyepiece (14), characterized in that the proximal end of said second image-transmitting system is fitted with a reticle (21) calibrated relative to said narrow angle and said predetermined working distance so that when said system is in sharp focus a physical dimension of said selected area can be observed and measured.

2. The visual inspection unit of claim 1 in which proximal ends of said image-transmitting systems are fitted with a common eyepiece (14) through which the images of both systems are observable.

3. The visual inspection unit of claim 2 in which the eyepiece (14) is adjustable in focus to accomodate individual eye correction.

4. The visual inspection unit of claim 1 in which each image-transmitting system is fitted with an adjustable focus eyepiece (14) at the proximal end of each system.

5. The visual inspection unit of claim 1 in which the reticle 21 represents a scale of polar coordinates, rectangular coordinates or a system of lines, grids or dots.

6. The visual inspection unit of claim 1 in which the image-transmitting systems (28, 29; 33, 34) are spaced apart and disposed in a generally parallel relationship.

7. The visual inspection unit of claim 1 in which the optical axes (31, 36) of the image-transmitting systems (28, 29; 33, 34) intersect one another at the point of sharp focus thereby eliminating parallax.

8. The visual inspection unit of claim 6 in which one objective lens (29) of one image-transmitting system (28, 29) is canted or displaced to eliminate parallax.

9. The visual inspection unit of claim 1 in which the proximal end of the first image-transmitting system is fitted with a reticle (22) calibrated relative to said wide angle lens (16) and said working distance so that when said narrow angle lens is in sharp focus the reticle on said first system represents a coarse measurement and the reticle (21) on said second system represents a fine measurement of a flaw, crack or other imperfection observed.

10. The visual inspection unit of claim 1 in which the second image-transmitting system (28, 29) is separable from said first system (33, 34) and adapted to be removed readily from said housing (12).

11. The visual inspection unit of claim 1 in which the inspection unit is fitted with one or more light-transmitting fiber optic bundles (18, 19) to provide illumination.

12. The visual inspection unit of claim 1 in which the first and second image-transmitting systems are rigid optical lens trains.

13. The visual inspection unit of claim 1 in which one image-transmitting system includes one fiber optic image bundle (28, 33).

14. The visual inspection unit of claim 1 in which both image-transmitting systems include flexible fiber optic image bundles (28, 33) susceptible of articulation.

15. The unit of claim 14 where proximal ends of said image bundles are fitted with a variable focus common eyepiece (14) through which the proximal ends of both bundles are observable.

16. The visual inspection unit of claim 14 in which the proximal end of the image bundle (33) of the second image-transmitting system is fitted with a reticle (21) calibrated relative to said narrow angle and said working distance so that when said system is moved into focus a physical dimension of said selected area can be observed.

17. The visual inspection unit of claim 15 in which the reticle (21) represents a scale of polar coordinates, rectangular coordinates or a system or lines, or dots.

18. The visual inspection unit of claim 14 in which the image bundles (28, 33) are spaced apart and disposed in a generally parallel relationship.

19. The visual inspection unit of claim 18 in which the centerlines of each bundle intersect one another at the point of sharp focus thereby eliminating parallax.

20. The visual inspection unit of claim 15 in which the proximal end of the image bundle (33) of the first image-transmitting system is fitted with a reticle (22) calibrated relative to said wide angle lens (16) and said working distance so that when said narrow angle lens (17) is in sharp focus the reticle (22) on the bundle of the first image-transmitting system represents a coarse reading and the reticle (21) on the bundle (28) of the second image-transmitting system represents a fine reading.

21. The visual inspection unit of claim 14 in which the image bundle (28) of the second image-transmitting system is separable from the image bundle (33) of the first image-transmitting system and adapted to be removed from said endoscope and inserted in a spare channel of a second endoscope.

22. The visual inspection unit of claim 14 in which the endoscope is fitted with one or more light-transmitting fiber optic bundles (18, 19).

**Revendications**

1. Ensemble d'inspection visuelle du type utilisé pour observer des pailles, des fissures ou d'autres défauts ou imperfections de matière en des emplacements industriels, médicaux ou vétérinaires éloignés de l'observateur, comprenant :
   au moins deux systèmes de transmission d'image (28, 29; 33, 34) dont chacun est pourvu d'une lentille d'objectif (17; 16) à une extrémité distale, le tout compris dans un boîtier commun (12),
   le premier système de transmission d'image étant pourvu d'une lentille d'objectif à foyer fixe grand-angle (16) ayant une grande profondeur de champ correspondante pour chercher et localiser une zone critique ; et
   le deuxième système de transmission d'image étant pourvu d'une lentille d'objectif à foyer fixe et angle étroit (17), ladite lentille à angle étroit ayant une profondeur de champ relativement petite et une distance de travail prédéterminée relativement courte et ledit deuxième système ayant un grossissement prédéterminé lorsqu'il est mis au point pour l'observation de parties sélectionnées de ladite zone critique,
les images provenant des deux systèmes de transmission d'image étant observées par un oculaire (14) caractérisé en ce que l'extrémité proximale dudit deuxième système de transmission d'image est pourvu d'un réticule (21) étalonné par rapport audit angle étroit et à ladite distance de travail prédéterminée, de sorte que, lorsque ledit système est mis au point, une dimension physique de ladite zone sélectionnée peut être observée et mesurée.

2. Ensemble d'inspection visuelle selon la revendication 1, dans lequel les extrémités proximales desdits systèmes de transmission d'image sont pourvus d'un oculaire commun (14) au travers duquel les images des deux systèmes peuvent être observées.

3. Ensemble d'inspection visuelle selon la revendication 2, dans lequel l'oculaire (14) est à distance focale réglable pour permettre une correction oculaire individuelle.

4. Ensemble d'inspection visuelle selon la revendication 1, dans lequel chaque système de transmission d'image est pourvu d'un oculaire (14) à distance focale réglable à l'extrémité proximale de chaque système.

5. Ensemble d'inspection visuelle selon la revendication 1, dans lequel le réticule (21) représente une échelle de coordonnées polaires, de coordonnées rectangulaires ou un système de lignes, de grilles ou de pointillés.

6. Ensemble d'inspection visuelle selon la revendication 1, dans lequel les systèmes de transmission d'image (28, 29; 33, 34) sont espacés l'un de l'autre et disposés en relation généralement parallèle.

7. Ensemble d'inspection visuelle selon la revendication 1, dans lequel les axes optiques (31, 36) des systèmes de transmission d'image (28, 29; 33, 34) s'intersectent l'un l'autre au point de focalisation, éliminant ainsi la parallaxe.

8. Ensemble d'inspection visuelle selon la revendication 6, dans lequel une lentille d'objectif (29) d'un système de transmission d'image (28, 29) est inclinée ou déplacée pour éliminer la parallaxe.

9. Ensemble d'inspection visuelle selon la revendication 1, dans lequel l'extrémité proximale du premier système de transmission d'image est pourvue d'un réticule (22) étalonné par rapport à ladite lentille grand-angle (16) et à ladite distance de travail, de telle sorte que, lorsque ladite lentille à angle étroit est mise au point, le réticule dudit premier système représente une mesure grossière et le réticule (21) du second système représente une mesure fine d'une faille, fissure ou autre imperfection observée.

10. Ensemble d'inspection visuelle selon la revendication 1, dans lequel le deuxième système de transmission d'image (28, 29) est séparable dudit premier système (33, 34) et adapté à être enlevé facilement dudit boîtier (12).

11. Ensemble d'inspection visuelle selon la revendication 1, dans lequel l'ensemble d'inspection est pourvu d'un ou plusieurs faisceaux de fibres optiques transmettant la lumière (18, 19) pour fournir un éclairage.

12. Ensemble d'inspection visuelle selon la revendication 1, dans lequel les premier et second systèmes de transmission d'image sont des trains de lentilles optiques rigides.

13. Ensemble d'inspection visuelle selon la revendication 1, dans lequel un système de transmission d'image comprend un faisceau image de fibres optiques (28, 33).

14. Ensemble d'inspection visuelle selon la revendication 1, dans lequel les deux systèmes de transmission d'image comprennent des faisceaux image de fibres optiques flexibles (28, 33) susceptibles d'articulation.

15. Ensemble selon la revendication 14, dans lequel les extrémités proximales desdits faisceaux image sont pourvues d'un oculaire commun à foyer variable (14) au travers duquel les extrémités proximales des deux faisceaux sont observables.

16. Ensemble d'inspection visuelle selon la revendication 14, dans lequel l'extrémité proximale du faisceau image (33) du deuxième système de transmission d'image est pourvue d'un réticule (21) étalonné par rapport audit angle étroit et à ladite distance de travail, de telle sorte que, lorsque ledit système est mis au point, une dimension physique de ladite zone sélectionnée peut être observée.

17. Ensemble d'inspection visuelle selon la revendication 15, dans lequel le réticule (21) représente une échelle de coordonnées polaires, de coordonnées rectangulaires ou un système de lignes ou de pointillés.

18. Ensemble d'inspection visuelle selon la revendication 14, dans lequel les faisceaux image (28, 33) sont espacés l'un de l'autre et disposés selon une relation généralement parallèle.

19. Ensemble d'inspection visuelle selon la revendication 18, dans lequel les lignes centrales de chaque faisceau s'intersectent l'une l'autre au point de focalisation, éliminant ainsi la parallaxe.

20. Ensemble d'inspection visuelle selon la revendication 15, dans lequel l'extrémité proximale du faisceau image (33) du premier système de transmission d'image est pourvu d'un réticule (22) étalonné par rapport à ladite lentille grand-angle (16) et ladite distance de travail, de telle sorte que, lorsque ladite lentille à angle étroit (17) est focalisée, le réticule (22) sur le faisceau dudit premier système de transmission d'image représente une lecture grossière et le réticule (21) sur le faisceau (28) du deuxième système de transmission d'image représente une lecture fine.

21. Ensemble d'inspection visuelle selon la revendication 14, dans lequel le faisceau image (28) du deuxième système de transmission d'image est séparable du faisceau image (33) du premier système de transmission d'image et adapté à être enlevé dudit endoscope et inséré dans un autre canal d'un second endoscope.

22. Ensemble d'inspection visuelle selon la revendication 14, dans lequel l'endoscope est pourvu d'un ou plusieurs faisceaux de fibres optiques transmettrices de lumière (18, 19).

**Ansprüche**

1. Eine visuelle Untersuchungseinheit der Art, die zum Beobachten von Fehlern, Rissen und anderen Defekten oder Imperfektionen von Material in industriellen, medizinischen oder tiermedizinischen Anwendungen, die entfernt von einem Beobachter lokalisiert sind, verwendet wird, mit:

wenigstens zwei Bildübertragungssystemen (28, 29; 33, 34), die jeweils an einem entfernten Ende mit einer Objektivlinse (17; 16) versehen alle in einem gemeinsamen Gehäuse (12) angeordnet sind,

wobei das erste Bildübertragungssystems mit einer Weitwinkelobjektivlinse (16) fester Brennweite mit einer entsprechend weiten Feldtiefe zum Untersuchen und Lokalisieren eines kritischen Bereichs ausgestattet ist; und

wobei das zweite Bildübertragungssystems mit einer Objektivlinse (17) mit einem schmalen Winkel und fester Brennweite ausgestattet ist, wobei die Linse mit dem schmalen Winkel eine relativ kleine Feldtiefe und einen relativ kurzen, vorgegebenen Arbeitsabstand besitzt und wobei das zweite System eine vorgegebene Vergrößerung für den Fall einer scharf eingestellten Brennweite bei der Beobachtung von ausgewählten Bereichen des kritischen Bereichs besitzt, wobei die Bilder beider Bildübertragungssysteme durch ein Okular (14) beobachtet werden,

dadurch gekennzeichnet, daß das nahe Ende des Bildübertragungssystems mit einem Retikel (21) ausgestattet ist, das bezüglich des schmalen Winkels und dem vorgegebenen Arbeitsabstand so kalibriert ist, daß, wenn das System in scharfer Brennweite ist, eine physikalische Dimension des ausgewählten Bereichs beobachtet und gemessen werden kann.

2. Die visuelle Untersuchungseinheit nach Anspruch 1, bei der die nahen Enden der Bildübertragungssysteme mit einem gemeinsamen Okular (14) ausgestattet sind, durch das die Bilder beider Systeme sichtbar sind.

3. Die visuelle Untersuchungseinheit nach Anspruch 2, bei der das Okular (14) in der Brennweite einstellbar ist, um eine Individuelle Augenkorrektur anzupassen.

4. Die visuelle Untersuchungseinheit nach Anspruch 1, bei der jedes Bildübertragungssystems mit einem in der Brennweite einstellbaren Okular (14) am nahen Ende jedes System ausgestattet ist.

5. Die visuelle Untersuchungseinheit nach Anspruch 1, bei der das Retikel (21) eine Skala von Polarkoordinaten, rechtwinkligen Koordinaten oder ein System von Linien, Gittern oder Punkten darstellt.

6. Die visuelle Untersuchungseinheit nach Anspruch 1, bei der die Bildübertragungssysteme (28, 29; 33, 34) voneinander getrennt und im allgemeinen parallel zueinander angeordnet sind.

7. Die visuelle Untersuchungseinheit nach Anspruch 1, bei der sich die optischen Achsen (31, 36) der Bildübertragungssysteme (28, 29; 33, 34) am Punkt des scharfen Brennpunkts schneiden und dadurch eine Parallaxe vermeiden.

8. Die visuelle Untersuchungseinheit nach Anspruch 6, bei der eine Objektivlinse (29) eines Bildübertragungssystems (28, 29) gekippt oder versetzt ist, um eine Parallaxe zu vermeiden.

9. Die visuelle Untersuchungseinheit nach Anspruch 1, bei der das nahe Ende des ersten Bildübertragungssystems mit einem Retikel (22) versehen ist, das bezüglich der Weitwinkellinse (16) und dem Arbeitsabstand so kalibriert ist, daß, wenn die Linse mit schmalen Winkel in scharfer Brennweite ist, das Retikel auf dem ersten System eine grobe Messung und das Retikel (21) auf dem zweiten System eine genaue Messung eines Fehlers, Risses oder einer anderen, beobachteten Imperfektion bietet.

10. Die visuelle Untersuchungseinheit nach Anspruch 1, bei der das zweite Bildübertragungssystems (28, 29) von dem ersten System (33, 34) trennbar ist und geeignet ist, einfach aus dem Gehäuse (12) entfernt zu werden.

11. Die visuelle Untersuchungseinheit nach Anspruch 1, bei der die Untersuchungseinheit mit einem oder mehreren lichtübertragenden Faseroptikbündeln (18, 19) ausgestattet ist, um Beleuchtung zur Verfügung zu stellen.

12. Die visuelle Untersuchungseinheit nach Anspruch 1, bei der die ersten und zweiten Lichtübertragungssysteme steife optische Linsenzüge sind.

13. Die visuelle Untersuchungseinheit nach Anspruch 1, bei der ein Bildübertragungssystems ein Faseroptikbildbündel umfaßt.

14. Die visuelle Untersuchungseinheit nach Anspruch 1, bei der beide Bildübertragungssysteme flexible Faseroptikbildbündel (28, 33) umfassen, die geeignet sind, gebogen zu werden.

15. Die Einheit nach Anspruch 14, bei der die nahe Enden der Bildbündel mit einem gemeinsamen Okular(14) mit variabler Brennweite ausgestattet sind, durch das die entfernten Enden beider Bündel beobachtbar sind.

16. Die visuelle Untersuchungseinheit nach Anspruch 14, bei der das nahe Ende des Bildbündels (33) des zweiten Bildübertragungssystems mit einem Retikel (21) ausgestattet ist, das bezüglich des schmalen Winkels und dem vorgegebenen Arbeitsabstand so kalibriert ist, daß, wenn das System in scharfer Brennweite ist, eine physikalische Dimension des ausgewählten Bereichs beobachtet und gemessen werden kann.

17. Die visuelle Untersuchungseinheit nach Anspruch 15, bei der das Retikel (21) eine Skala von Polarkoordinaten, rechtwinkligen Koordinaten oder ein System von Linien, Gittern oder Punkten darstellt.

18. Die visuelle Untersuchungseinheit nach Anspruch 14, bei der die Bündel (28, 33) voneinander getrennt und im allgemeinen parallel zueinander angeordnet sind.

19. Die visuelle Untersuchungseinheit nach Anspruch 18, bei der sich die Mittellinien jedes Bündels am Punkt des scharfen Brennpunkts schneiden und dadurch eine Parallaxe vermeiden.

20. Die visuelle Untersuchungseinheit nach Anspruch 15, bei der das nahe Ende des Bildbündels (33) des ersten Bildübertragungssystems mit einem Retikel (22) versehen ist, das bezüglich der Weitwinkellinse (16) und dem Arbeitsabstand so kalibriert ist, daß, wenn die Linse (17) mit schmalen Winkel in scharfer Brennweite ist, das Retikel (22) auf dem Bündel des ersten Bildübertragungssystems eine grobe Messung und das Retikel (21) auf dem Bündel (28) des zweiten Systems eine genaue Messung bietet.

21. Die visuelle Untersuchungseinheit nach Anspruch 14, bei der das Bildbündel (28) des zweiten Bildübertragungssystems von dem Bildbündel (33) des ersten Bildübertragungssystems trennbar ist und geeignet ist, leicht von dem Endoskop entfernt zu werden und in einen Ersatzkanal eines zweiten Endoskops eingesetzt zu werden.

22. Die visuelle Untersuchungseinheit nach Anspruch 14, bei der das Endoskop mit einem oder mehreren lichtübertragenden optischen Faserbündeln (18, 19) ausgestattet ist.

FIG.1

FIG.2

FIG.3

FIG.4

FIG.5

FIG.6

FIG.7